# FASCICULE DE BREVET EUROPEEN

(11) **EP 2 411 791 B1**
(45) Date de publication et mention de la délivrance du brevet: **14.03.2018**
(21) Numéro de dépôt: 10716571.4
(22) Date de dépôt: 23.03.2010
(51) Int. Cl.: G01N 35/02, G01N 35/04

(54) **DISPOSITIF DE CONFINEMENT ET D'ANALYSE**
EINSCHRÄNKUNGS- UND ANALYSEGERÄT
CONFINEMENT AND ANALYSIS DEVICE

(30) Priorité: 23.03.2009 FR 0951850
(43) Date de publication de la demande: 01.02.2012
(73) Titulaire: Centre National d'Etudes Spatiales, 75001 Paris (FR)
(72) Inventeur: CHAZALNOEL, Pascale, F-31280 Dremil-Lafage (FR); FIHMAN, François, F-38320 Herbeys (FR); SIMIONOVICI, Alexandre, F-38330 Saint Ismier (FR)
(74) Mandataire: Lavoix
(86) Numéro de dépôt international: PCT/FR2010/050519
(87) Numéro de publication internationale: WO 2010/109126

(56) Documents cités:
- US-A- 4 047 820
- US-A- 5 105 932
- US-A- 5 181 233

## Description

La présente invention concerne un dispositif de confinement et d'analyse d'une pluralité d'échantillons disposés dans au moins un tube, comprenant au moins une enceinte comportant des moyens de fermeture étanche, un élément de support dudit tube adapté pour être disposé dans ladite enceinte, et au moins une fenêtre de visée ménagée à travers une paroi de ladite enceinte.

Un tel dispositif est notamment utilisé pour l'analyse d'échantillons multiples en condition de quarantaine, par exemple des échantillons dangereux pour l'homme. Ces échantillons ne doivent pas être en contact avec l'extérieur, et doivent être analysés par différents appareils de mesure, comme par exemple des appareils à rayons X, Infra Rouge, ou encore des spectromètres Raman. Un même échantillon confiné dans le dispositif doit être analysé par plusieurs de ces appareils, et cet échantillon doit ainsi être positionné dans une position d'analyse optimale.

Le document US 5 181 233 décrit un dispositif de confinement d'un échantillon, destiné à être monté dans un appareil d'analyse tel qu'un goniomètre.

Le document US 5 105 932 divulgue un dispositif d'entraînement par induction permettant de déplacer de manière précise un échantillon placé dans une enceinte étanche.

Un objectif de l'invention est de proposer un dispositif de confinement et d'analyse qui permette de présenter un échantillon déterminé dans une position d'analyse optimale, sans pénaliser l'étanchéité du dispositif.

L'invention a donc pour objet un dispositif du type précité qui est remarquable en ce qu'il comprend un dispositif d'entraînement par induction disposé hors de ladite enceinte pour le déplacement dudit élément de support à l'intérieur de ladite enceinte dans l'état fermé de celle-ci de façon à amener l'un quelconque des échantillons de ladite pluralité d'échantillons devant la fenêtre de visée.

Selon d'autres caractéristiques de l'invention considérées seules ou en combinaison:
- ledit élément de support est monté mobile en rotation dans ladite enceinte pour amener ledit tube dans une position d'analyse d'échantillon en regard de ladite fenêtre de visée ;
- ledit élément de support est monté mobile en translation dans ladite enceinte pour amener ledit tube dans une position d'analyse d'échantillon en regard de ladite fenêtre de visée ;
- ledit élément de support est monté sur un arbre en matériau magnétique adapté pour être déplacé dans ladite enceinte par ledit dispositif d'entraînement par induction ;
- ledit dispositif d'entraînement par induction est un dispositif d'entrainement magnétique ;
- l'élément de support présente la forme d'un barillet rotatif, ledit tube étant monté sur le barillet parallèlement à l'axe de rotation dudit barillet.
- le barillet comporte un fourreau axial et deux plateaux parallèles disposés au voisinage des extrémités dudit fourreau et comportant des moyens de montage dudit tube entre lesdits plateaux, parallèlement audit fourreau ;
- ledit fourreau est monté sur ledit arbre ;
- ledit dispositif comporte plusieurs enceintes de confinement, au moins une enceinte intermédiaire étant disposée entre une enceinte interne et une enceinte externe, le dispositif d'entraînement par induction étant disposé hors de l'enceinte externe ;
- chacune desdites enceintes comporte au moins une de fenêtre de visée alignée avec une fenêtre de visée de chacune des autres enceintes ;
- ledit dispositif comporte des moyens de mesure de la pression et/ou de la température dans ladite enceinte.

Les caractéristiques et avantages de l'invention apparaîtront au cours de la description qui va suivre, donnée à titre d'exemple et faite en référence aux dessins annexés, sur lesquels :
- la figure 1 est une vue en perspective d'un dispositif de confinement et d'analyse selon un premier mode de réalisation de l'invention, les brides de fermeture des enceintes n'étant pas représentées ;
- la figure 2 est une vue de dessus du dispositif représenté à la figure 1 ;
- la figure 3 est une représentation schématique en coupe, vue de côté, du dispositif de confinement selon l'invention et d'un dispositif d'entraînement magnétique associé ;
- la figure 3a est une représentation des moyens de fixation des parois de fermetures des enceintes selon un mode de réalisation de l'invention ;la figure 4 est une représentation schématique en coupe d'un mode de réalisation des moyens de mesure de la pression et/ou de la température selon l'invention ;
- la figure 5 est une vue en perspective d'un élément de support selon un mode de réalisation particulier de l'invention comportant cinq tubes porte-échantillons ; et
- la figure 6 est une vue de côté de l'élément de support de la figure 5, et de l'arbre magnétique associé selon l'invention.

Le dispositif de confinement selon l'invention comporte une enceinte de confinement interne 2 à l'intérieur de laquelle un élément de support 8 porte des tubes 10 d'échantillons à analyser. L'élément de support 8 est apte à être mis en rotation et/ou en translation à l'intérieur de l'enceinte interne 2 au moyen d'un dispositif d'entraînement magnétique 12.

L'enceinte interne 2 est disposée à l'intérieur d'une deuxième enceinte intermédiaire 4, qui est elle-même reçue à l'intérieur d'une troisième enceinte externe 6. Les trois enceintes 2, 4, 6 ont des formes complémentaires et ne sont séparées deux à deux que par un mince espace intermédiaire.

Chaque enceinte 2, 4, 6 est formée respectivement d'un caisson tubulaire allongé 14, 16, 18 s'étendant principalement selon un axe Z-Z', et fermé hermétiquement par une paroi 20, 22, 24 à une première de ses extrémités et par une bride de fermeture 26, 28, 30 à son autre extrémité.

Des bagues 21, 23 en téflon semi rigide sont disposées entre les brides de fermeture 26, 28, 30 des enceintes, et des entretoises 27, 29 sont disposées entre les parois 20, 22, 24 pour maintenir l'espace intermédiaire entre les enceintes.

Une première extrémité 2a de l'enceinte interne 2 est fermée par une première paroi de fermeture 20. Une deuxième paroi de fermeture 22 ferme la première extrémité 4a de la deuxième enceinte 4, et s'étend, en regard de et parallèlement à la première paroi de fermeture 20. Une troisième paroi de fermeture 24 ferme la première extrémité 6a de la troisième enceinte 6, et s'étend en regard de et parallèlement à la deuxième paroi de fermeture 22. Des pieds 31 sont vissés sur la troisième paroi de fermeture 24 pour permettre la fixation du dispositif de confinement sur un bâti 33 apte à le recevoir.

Un bac de réception 35 est fixé sur la première paroi de fermeture 20, à l'intérieur de l'enceinte interne 2. Ce bac de réception 35 présente une forme cylindrique, et est centré sur l'axe Z-Z'.

Les brides de fermetures 26, 28, 30 ferment hermétiquement la deuxième extrémité de chacune des enceintes 2, 4, 6 du dispositif.

Chacune des brides de fermeture 26, 28, 30 constituent une collerette périphérique qui fait saillie à l'extrémité d'un tube cylindrique 56, 58, 60 dont l'autre extrémité est fermée. Un premier tube cylindrique 56 et la première bride de fermeture 26 ferment hermétiquement l'enceinte interne 2. Un deuxième tube cylindrique 58 et la deuxième bride de fermeture 28 ferment hermétiquement la deuxième enceinte 4, et présentent une dimension axiale selon Z-Z' et des diamètres tels qu'ils recouvrent le premier tube cylindrique 56 et la première bride de fermeture 26. De même, un troisième tube cylindrique 60 et la troisième bride de fermeture 30 associée ferment hermétiquement la troisième enceinte 6, et présentent des dimensions permettant de recouvrir la deuxième enceinte 4 par la troisième enceinte 6 du dispositif.

Un élément de blocage mécanique 61 est fixé sur la paroi externe de la troisième bride de fermeture 30 et s'étend hors du dispositif de confinement, le long de l'axe Z-Z' en regard du troisième tube cylindrique 60.

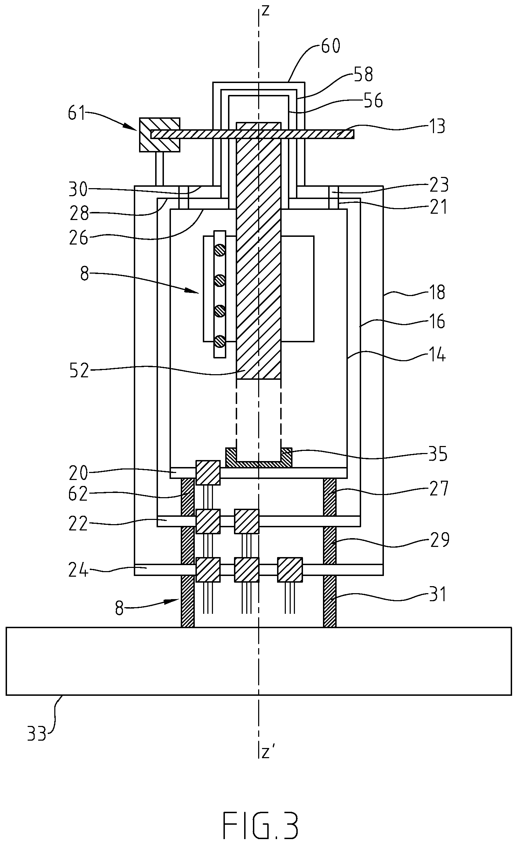

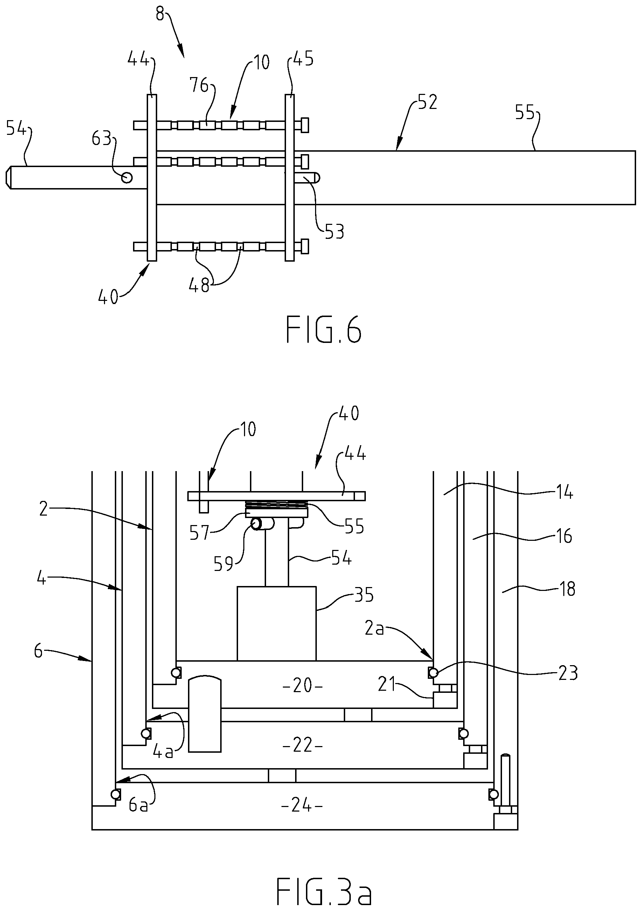

La fixation des parois de fermeture 20, 22, 24 et des brides de fermeture 26, 28, 30 sur les caissons 14, 16, 18 des enceintes peut se faire par tout moyen assurant une fixation et une étanchéité optimale, et permettant l'ouverture et la fermeture du dispositif pour l'insertion de l'élément de support des échantillons. Comme illustré à titre d'exemple par la figure 3a, la paroi de fermeture 20 est rapportée sur le caisson 14 de l'enceinte interne 2 et solidarisée à celle-ci par une vis 21. L'étanchéité entre le caisson 14 et la paroi de fermeture 20 est assurée par la réalisation d'une gorge dans le caisson 14 et la présence d'un joint d'étanchéité 23 dans cette gorge, ce joint 23 pouvant être disposé de manière à être compressé par l'effort de serrage de la vis lors de la fixation de la paroi de fermeture.

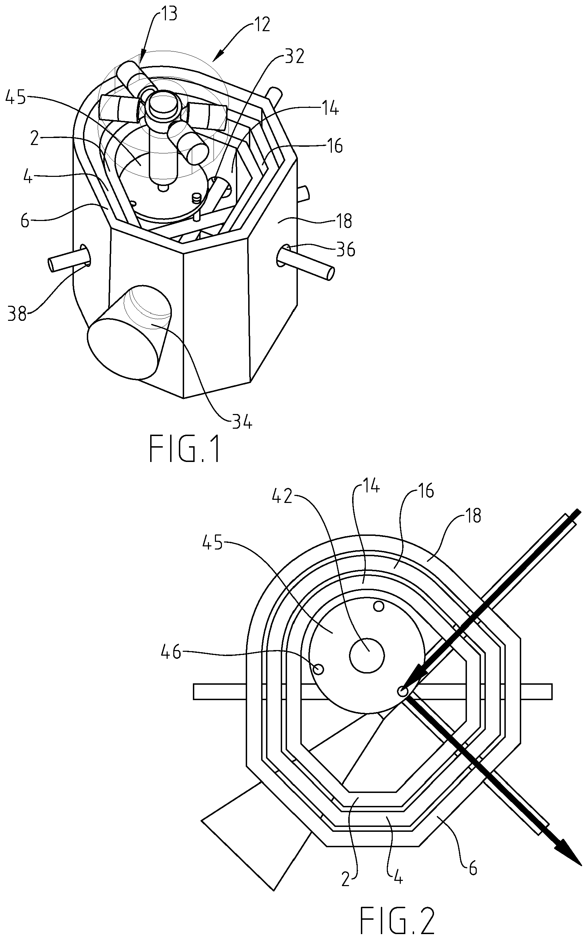

La forme des enceintes peut varier dès lors que ces formes permettent à l'enceinte interne 2 d'être entourée par l'enceinte intermédiaire 4, qui doit être apte à être entourée par l'enceinte externe 6. Comme illustré par les figures 1 et 2, les enceintes peuvent présenter une forme tubulaire à section polygonale ou pseudo polygonale. La forme des enceintes doit permettre le logement d'un élément de support 8 des échantillons, et la libre circulation de rayons issus d'appareils de mesure, tel que cela sera décrit ci-dessous. Dans le présent mode de réalisation, le dispositif de confinement est positionné verticalement lors des mesures et analyses.

Le dispositif de confinement comprend trois enceintes afin d'être en cohérence avec les recommandations de l'Organisation Mondiale de la Santé et avec les conditions de quarantaine BIOHAZARD de type BSL4. Il sera compris que si ces recommandations évoluent, ou si les échantillons à analyser ne nécessitent pas des conditions de quarantaine aussi sévères, le nombre d'enceintes peut être inférieur ou supérieur.

Chaque enceinte 2, 4, 6 est munie de fenêtres de visée alignées, qui sont agencées pour que des rayons déterminés puissent transiter d'un appareil de mesure donné vers un échantillon déterminé, et réciproquement. A cet effet, pour chacune des fenêtres de visée de l'enceinte interne 2, ladite fenêtre forme un alignement avec une fenêtre de l'enceinte intermédiaire 4 et une fenêtre de l'enceinte externe 6.

Des premières fenêtres de visée 32, 34, 36 sont aptes à permettre une analyse hyper spectrale des échantillons aux rayons X. De façon connue, des fenêtres d'admission 32 sont prévues sur une face de chaque enceinte, alignées comme décrit précédemment pour que le faisceau X atteigne une région déterminée de l'enceinte interne 2. La dimension de chacune des fenêtres d'admission 32 est la même pour l'une ou l'autre des enceintes 2, 4, 6. Des premières fenêtres de sortie 34 sont prévues sur les faces de chaque enceinte opposées aux faces portant les fenêtres d'admission 32, pour la mesure de diffraction à 180° du faisceau entrant. La dimension des premières fenêtres de sortie 34 évolue en grandissant depuis l'enceinte interne 2 vers l'enceinte externe 6, le faisceau diffracté qui doit être mesurée à travers ces fenêtres présentant une forme conique.

Des secondes fenêtres de sortie 36 sont prévues sur une face de chaque enceinte pour l'analyse de fluorescence des rayons X, à 90° du faisceau incident. La dimension de chacune des secondes fenêtres de sortie 36 est la même pour l'une ou l'autre des enceintes 2, 4, 6.

Avantageusement, les fenêtres propres à l'analyse aux rayons X sont formées de Béryllium. Le matériau choisi doit en effet être léger, absorber au minimum la fluorescence et la diffraction des rayons X, et être apte à résister à la dépression réalisée dans et entre les enceintes pour l'étanchéité du dispositif.

Des deuxièmes fenêtres de visée 38 sont aptes à permettre la mesure de rayons Raman, de rayons Infra rouges, et de rayons visibles, et peuvent être disposées sur chacune des faces des enceintes 2, 4, 6, de sorte qu'un alignement soit respecté entre la deuxième fenêtre de visée de l'enceinte interne 2, la deuxième fenêtre de visée de l'enceinte intermédiaire 4, et la deuxième fenêtre de visée de l'enceinte externe 6. La dimension de chacune des deuxièmes fenêtres de visée 38 est la même pour l'une ou l'autre des enceintes 2, 4, 6. Avantageusement, ces deuxièmes fenêtres de visées 38 sont en saphir transparent.

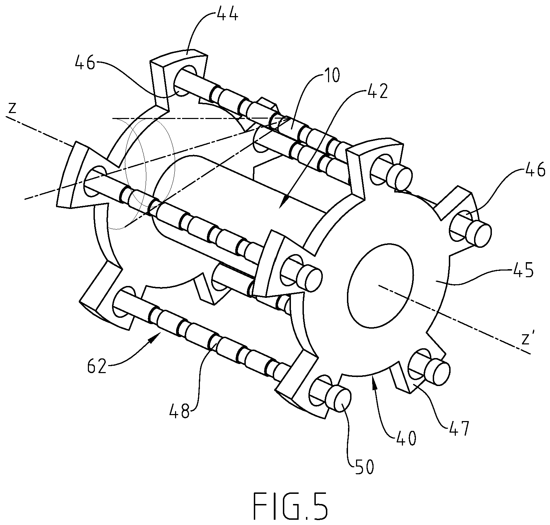

L'élément de support 8 présente la forme d'un barillet 40 monté rotatif autour d'un axe Z-Z'. Le barillet 40 comporte de préférence un fourreau creux 42 d'axe Z-Z', et deux plateaux 44, 45 qui sont montés sur ce fourreau 42 et disposés à distance l'un de l'autre, parallèlement l'un à l'autre. Les deux plateaux 44, 45 sont de même forme, de contour général circulaire, et d'axe Z-Z'. Chaque plateau 44, 45 présente à sa périphérie des trous de guidage 46. La forme des plateaux peut varier sans sortir du contexte de l'invention, et présenter à titre d'exemple des ailettes radiales 47 disposées à la périphérie des plateaux, et dans lesquelles sont réalisés les trous de guidage, comme illustré à la figure 5.

Le barillet 40 porte, régulièrement répartis circulairement autour de celui-ci, une pluralité de tubes 10 aptes chacun à porter au moins un échantillon 48. Les tubes 10 s'étendent parallèlement au fourreau 42 du barillet selon l'axe Z-Z', et entre les plateaux 44, 45. Chaque tube 10 coopère avec un trou de guidage du premier plateau 44 et avec un trou de guidage du deuxième plateau 45. L'arrêt en rotation des tubes 10 par rapport à l'élément de support 8 est obtenu par l'ajustement des dimensions des trous de guidage et du tube 10. L'arrêt en translation des tubes 10 par rapport à l'élément de support 8 est obtenu par des bouchons 50 rapportés à chacune des extrémités des tubes 10 ou par tout autre moyen approprié.

Les tubes 10 sont avantageusement des tubes capillaires en quartz de très faible épaisseur, de manière à bien tenir les échantillons dans les tubes sans les coller. Dans l'exemple illustré par la figure 2, trois tubes 10 peuvent être portés par l'élément de support 8, et cinq échantillons 48 sont disposés à l'intérieur de chaque tube 10. Il sera compris que le nombre de ces tubes 10 et de ces échantillons 48 pourrait varier sans sortir du contexte de l'invention. Dans l'exemple illustré par la figure 5 l'élément de support peut porter cinq tubes 10.

Les tubes 10 peuvent présenter des dimensions équivalentes entre eux. Afin de pouvoir positionner plusieurs tailles d'échantillons dans le dispositif de confinement et d'analyse de l'invention, il pourra être prévu de positionner dans le barillet des tubes de diamètre différents, ou des tubes présentant des emplacements indexés de dimensions différentes.

L'élément de support 8 est monté sur l'extrémité de diamètre réduit 54 d'un arbre central 52 et prend appui du côté du plateau 45 contre la partie de plus grand diamètre 55 de cet arbre 52. L'arbre 52 est équipé d'un élément inductif en vis-à-vis de l'élément 12. L'élément de support 8 est rendu solidaire de cet arbre 52, par exemple par la réalisation d'une encoche sur le fourreau 42 et d'une goupille 53, tel qu'illustré par la figure 6.

L'élément de support 8 est monté sur l'arbre 52 au voisinage d'une extrémité 54 de diamètre réduit de l'arbre 52. L'extrémité opposée 55 de l'arbre 52 s'étend hors du fourreau 42, dans le premier tube cylindrique 56. L'élément de support 8 est sollicité en prise avec la goupille 53 par un ressort 55 qui prend appui entre le plateau 44 et une rondelle 57 enfilée sur l'extrémité de diamètre réduit 54 de l'arbre 52. La rondelle 57 est retenue axialement sur l'extrémité 54 par une goupille 59 reçue dans un orifice transversal 63.

La longueur de l'arbre 52 est au moins égale à la distance qui sépare le fond 20 de la bride 26, mais inférieure à celle qui sépare le fond 20 de l'extrémité du tube 56 afin de permettre un mouvement de translation de cet arbre comme cela sera expliqué dans la suite. De préférence, un palier (non représenté) est prévu dans le tube cylindrique 56 afin de permettre la translation de l'arbre 52 selon l'axe ZZ' et sa rotation autour de cet axe. Si ce palier n'est pas suffisamment rigide, il pourra être prévu que le bord du bac 35 présente une hauteur adaptée pour assurer en permanence le guidage de l'arbre 52 à son extrémité de diamètre réduit 54 opposée au tube 56. Ce premier tube cylindrique 56 présente une dimension axiale selon Z-Z' et un diamètre aptes à recouvrir l'arbre 52. L'arbre 52 et l'élément de support 8 associé sont ainsi intégralement contenus dans l'enceinte interne 2.

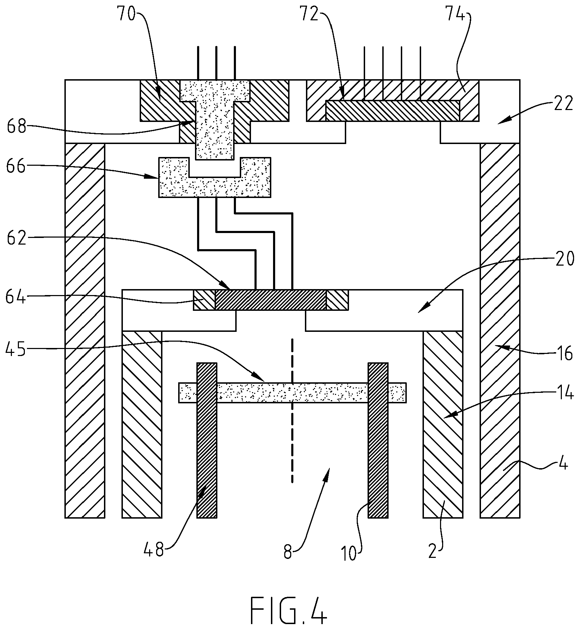

Comme illustré par la figure 4, des moyens de mesure de la pression et de la température des enceintes sont prévus, pour contrôler l'étanchéité de l'ensemble. Un premier capteur 62 est disposé dans une résine 64, dans le volume de la première paroi de fermeture 20 associée à l'enceinte interne 2. Ce premier capteur 62 est apte à mesurer la pression et/ou la température dans l'enceinte interne 2, et est relié par des conducteurs et par des moyens de connexion à une unité de contrôle et des moyens d'affichage non représentés. Ces moyens de connexion comprennent un connecteur mâle 66 apte à être connecté avec un connecteur femelle 68, disposé dans une résine 70 dans le volume de la deuxième paroi de fermeture 22 associée à l'enceinte intermédiaire 4. Un deuxième capteur 72 est disposé dans une résine 74, dans le volume de cette même deuxième paroi de fermeture 22 de l'enceinte intermédiaire 4. Le deuxième capteur 72 est apte à mesurer la pression et/ou la température dans l'enceinte intermédiaire 4, et est relié par des conducteurs et des moyens de connexion à l'unité de contrôle non représentée. Un différentiel de pression et/ou de température peut être mesurée et affichée pour déterminer si l'étanchéité entre les enceintes est conservée. De façon analogue, et non représentée, des moyens de connexion et un troisième capteur sont disposés dans le volume de la troisième paroi de fermeture associée à l'enceinte externe, de manière à respectivement transmettre les informations des premiers et deuxièmes capteurs vers l'unité de contrôle, et permettre de calculer un second différentiel de pression et/ou de température entre l'enceinte intermédiaire et l'enceinte externe.

Ces capteurs sont avantageusement interrogés périodiquement par l'unité de contrôle muni d'une carte d'acquisition des trois signaux de pression et des trois signaux de température.

Le dispositif de confinement et d'analyse est positionné dans une chambre d'analyse à une place déterminée. Des appareils de mesure sont disposés dans ladite chambre d'analyse à des endroits déterminés. Chaque échantillon 48 à analyser doit donc être apte à être déplacé au sein de l'enceinte interne 2 pour arriver successivement en regard des premières fenêtres de visées 32, 34, 36 pour être sur la trajectoire du faisceau de rayons X, et/ou en regard des deuxièmes fenêtres de visées 38, pour être observables par des microscopes.

Un dispositif d'entraînement magnétique 12, de type à aimants, est prévu dans la chambre d'analyse. Le déplacement de ce dispositif génère un flux magnétique, dont l'intensité et l'orientation entraînent le déplacement de l'arbre 52 à l'intérieur de l'enceinte interne 2. Dans un mode de réalisation représenté aux figures 1 et 3, le dispositif d'entraînement magnétique présente la forme d'une bobine 13, dont l'orifice intérieur est ajusté au diamètre du troisième tube cylindrique 60 associé à l'enceinte externe 6. Le déplacement de la bobine 13 dans un mouvement de translation le long du troisième tube cylindrique cylindre 60 génère un déplacement en translation selon l'axe Z-Z' de l'arbre magnétique 52 à l'intérieur de l'enceinte interne 2, et le déplacement de la bobine 13 en rotation autour du cylindre génère un déplacement en rotation autour de l'axe Z-Z' de l'arbre magnétique 52. Le pilotage de la bobine 13 peut être manuel ou commandé, l'ensemble du dispositif d'entraînement magnétique 12 restant dans les deux cas non intrusif, à l'extérieur des enceintes 2, 4, 6 de confinement du dispositif.

L'arbre magnétique 52 est ainsi apte à se déplacer longitudinalement le long de l'axe Z-Z', et apte à être mise en rotation autour de l'axe Z-Z'. L'élément de support 8, solidaire de cet arbre 52, suit le déplacement de l'arbre 52, et les tubes 10 portés par l'élément de support 8 se déplacement également. Par ce double mouvement de l'arbre magnétique 52, l'utilisateur peut amener un échantillon disposé dans un des tubes 10 à la position souhaitée pour l'analyse souhaitée.

L'utilisation du dispositif de confinement et d'analyse selon l'invention comprend une première étape dans laquelle on place dans un environnement stérile les échantillons à analyser à l'intérieur de l'enceinte interne du dispositif. Au moins un échantillon est placé dans chaque tube 10. Chacun des échantillons 48 est placé individuellement dans un emplacement indexé 76 du tube 10, et dans le cas illustré par les figures ou plusieurs échantillons sont présents dans un même tube 10, une distance suffisante est respectée entre chaque échantillon 48 pour que l'analyse d'un échantillon ne soit pas perturbée par la proximité d'un autre. Les échantillons sont immobilisés dans leur emplacement, dans toutes les orientations, par exemple par l'utilisation d'un aérogel.

Les tubes 10 portent les échantillons qui ne doivent pas être en contact avec l'air libre. Ces tubes sont placés sur l'élément de support 8 dans une chambre sous quarantaine. L'élément de support 8 est rendu solidaire de l'arbre magnétique 52, puis placé dans l'enceinte interne 2. L'arbre 52 est dans un premier temps engagé dans le bac de réception 35, de manière à pouvoir être transporté dans cette position. Le diamètre de l'extrémité 54 de l'arbre 52 et le diamètre du bac de réception 35 sont déterminés pour que le transport puisse être effectué sans que l'arbre 52 ne bouge du bac de réception. Chacune des enceintes 2, 4, 6 du dispositif de confinement est alors rendue étanche par fermeture de son fond. Le dispositif de confinement et d'analyse est transporté vers la chambre d'analyse, un contrôle de l'étanchéité du dispositif et de chaque enceinte le composant étant réalisé en continu par les moyens de mesure de pression et/ou de température appropriés.

Dans la chambre d'analyse, le dispositif de confinement permet une mesure directe de l'échantillon par les appareils de mesure, sans que l'échantillon soit sorti du dispositif de confinement et d'analyse de l'invention, et donc sans perte de l'étanchéité. Les appareils de mesure peuvent être différents d'une chambre d'analyse à une autre, et peuvent par exemple être des appareils mesurant des rayons X, comprenant des moyens d'émission de rayons X, une caméra pour la mesure de la diffraction de ces rayons, et un détecteur de fluorescence desdits rayons. De façon connue, ces composants sont placés de façon précise dans la chambre d'analyse les uns par rapport aux autres. D'autres appareils sont aptes à être disposés dans la chambre d'analyse, comme des microscopes pour des rayons visibles, infrarouge, ou Raman. La disposition de ces appareils de mesure est fixe dans la chambre d'analyse, et les échantillons sont amenés un à un en regard des fenêtres de visée 32, 34, 36, 38 pour être soumis à l'analyse souhaitée.

A cet effet, le dispositif d'entraînement magnétique 12 disposé dans la chambre d'analyse déplace l'arbre 52 dont est solidaire en rotation et en translation le support 8 des tubes 10 portant les échantillons. Comme décrit précédemment, ce déplacement de l'élément de support 8 peut être une rotation ou une translation. Lors de l'analyse, le déplacement le long de l'axe Z-Z' du dispositif d'entraînement magnétique 12 attire l'arbre 52 hors du bac de réception 35, et soulève l'arbre 52. L'élément de blocage mécanique 61 permet le blocage du dispositif d'entraînement magnétique 12 dans la position voulue. D'une mesure à l'autre, pour un même appareil de mesure, la rotation du dispositif d'entraînement magnétique 12 dans une même position du support 61 entraîne la rotation de l'arbre magnétique 52, ce qui permet de changer de tube 10, tandis que le passage du dispositif d'entraînement magnétique 12 dans une position différente de l'élément de support 61 entraîne la translation de l'arbre 52, ce qui permet de changer d'échantillon pour un même tube 10.

La combinaison de ces deux mouvements possibles de l'élément de support permet d'amener l'échantillon déterminé devant l'appareil de mesure déterminé. Le barillet 40 est en effet déplacé avec l'arbre 52 depuis l'extérieur par les puissants aimants permanents du dispositif d'entraînement magnétique 12, sans compromettre l'étanchéité par des passages d'éléments mécaniques.

Le dispositif selon l'invention peut être utilisé pour le confinement et l'analyse de différents types d'échantillons, et notamment de grains extraterrestres, dans lesquels on cherche à détecter et reconnaître des microorganismes. La taille de ces grains est microscopique, et le dispositif de confinement et d'analyse portant ces échantillons est miniaturisé. Le barillet est en composite ou inox, pour obtenir un dispositif selon l'invention léger et miniaturisé. A titre d'exemple, la longueur selon l'axe Z-Z' du barillet illustré à la figure 5 est de 22 millimètres, et le diamètre des plateaux du barillet est de 18 millimètres.

Le dispositif selon l'invention permet un déplacement relatif de l'échantillon par rapport à l'appareil de mesure, sans que les moyens utilisés soient pénalisant pour l'étanchéité du dispositif, et sans que les appareils de mesure aient à être déplacés, ce qui assure une précision des mesures. Avantageusement, le déplacement de l'élément de support est réalisé à pression constante.

Ainsi, le dispositif selon l'invention permet l'analyse simultanée d'un même échantillon par plusieurs appareils, en conditions d'analyse hyperspectrale, l'étanchéité de chaque enceinte étant garantie par des mesures périodiques et non-invasives de la pression et de la température dans chaque enceinte.

## Revendications

1. Dispositif de confinement et d'analyse d'une pluralité d'échantillons (48) disposés dans au moins un tube (10), comprenant :
- au moins une enceinte comportant des moyens de fermeture étanche (2),
- un élément de support (8) dudit tube (10) adapté pour être disposé dans ladite enceinte (2) ; et
- au moins une fenêtre de visée (32, 34, 36, 38) ménagée à travers une paroi de ladite enceinte (2),
**caractérisé en ce que** ledit dispositif comprend un dispositif d'entraînement par induction (12) disposé hors de ladite enceinte (2) pour le déplacement dudit élément de support (8) à l'intérieur de ladite enceinte dans l'état fermé de celle-ci de façon à amener l'un quelconque des échantillons de ladite pluralité d'échantillons (48) devant la fenêtre de visée (32, 34, 36, 38).

2. Dispositif selon la revendication 1, **caractérisé en ce que** ledit élément de support (8) est monté mobile en rotation dans ladite enceinte pour amener ledit tube (10) dans une position d'analyse d'échantillon en regard de ladite fenêtre de visée (32, 34, 36, 38).

3. Dispositif selon l'une quelconque des revendications 1 et 2, **caractérisé en ce que** ledit élément de support (8) est monté mobile en translation dans ladite enceinte pour amener ledit tube (10) dans une position d'analyse d'échantillon en regard de ladite fenêtre de visée (32, 34, 36, 38).

4. Dispositif selon l'une quelconque des revendications 2 et 3, **caractérisé en ce que** ledit élément de support (8) est monté sur un arbre en matériau magnétique (52) adapté pour être déplacé dans ladite enceinte (2) par ledit dispositif d'entraînement par induction (12).

5. Dispositif selon la revendication 4, **caractérisé en ce que** ledit dispositif d'entraînement par induction (12) est un dispositif d'entrainement magnétique.

6. Dispositif selon l'une des revendications précédentes, **caractérisé en ce que** l'élément de support (8) présente la forme d'un barillet rotatif (40), ledit tube (10) étant monté sur le barillet (40) parallèlement à l'axe de rotation (Z-Z') dudit barillet.

7. Dispositif selon la revendication 6, **caractérisé en ce que** le barillet (40) comporte un fourreau axial (42) et deux plateaux parallèles (44, 45) disposés au voisinage des extrémités dudit fourreau et comportant des moyens de montage dudit tube (10) entre lesdits plateaux, parallèlement audit fourreau.

8. Dispositif selon les revendications 4 et 7, **caractérisé en ce que** ledit fourreau (42) est monté sur ledit arbre (52).

9. Dispositif selon l'une quelconque des revendications 1 à 8, **caractérisé en ce qu'**il comporte plusieurs enceintes de confinement, au moins une enceinte intermédiaire (4) étant disposée entre une enceinte interne (2) et une enceinte externe (6), le dispositif d'entraînement par induction (12) étant disposé hors de l'enceinte externe (6).

10. Dispositif selon la revendication 9, **caractérisé en ce que** chacune desdites enceintes (2, 4, 6) comporte au moins une de fenêtre de visée (32, 34, 36, 38) alignée avec une fenêtre de visée de chacune des autres enceintes.

11. Dispositif selon l'une des revendications précédentes, **caractérisé en ce qu'**il comporte des moyens de mesure de la pression et/ou de la température dans ladite enceinte (2).

## Patentansprüche

1. Vorrichtung zur Aufnahme und zur Analyse einer Vielzahl von Proben (48), die in mindestens einem Rohr (10) angeordnet sind, bestehend aus:
- mindestens einer Kammer, die Mittel zum luftdichten Verschluss (2) umfasst;
- ein Trägerelement (8) des besagten Rohrs (10), dazu geeignet, um in der besagten Kammer (2) angeordnet zu werden; und
- mindestens ein Zielfenster (32, 34, 36, 38), das durch eine Wand der besagten Kammer (2) angebracht ist;
**dadurch gekennzeichnet, dass** die besagte Vorrichtung eine Induktionsantriebsvorrichtung (12) enthält, die außerhalb der besagten Kammer (2) angeordnet ist, für das Verschieben des besagten Trägerelements (8) in das Innere der besagten Kammer im geschlossenen Zustand von dieser, so dass eine beliebige Probe aus der besagten Vielzahl an Proben (48) vor das Zielfenster (32, 34, 36, 38) gebracht wird.

2. Vorrichtung nach Anspruch 1, **dadurch gekennzeichnet, dass** das besagte Trägerelement (8) drehbar in der besagten Kammer angebracht ist, um das besagte Rohr (10) in eine Probenanalyseposition in Bezug auf das besagte Zielfenster (32, 34, 36, 38) zu bringen.

3. Vorrichtung nach einem der Ansprüche 1 und 2, **dadurch gekennzeichnet, dass** das besagte Trägerelement (8) verschiebbar in der besagten Kammer angebracht ist, um das besagte Rohr (10) in eine Probenanalyseposition in Bezug auf das besagte Zielfenster (32, 34, 36, 38) zu bringen.

4. Vorrichtung nach einem der Ansprüche 2 und 3, **dadurch gekennzeichnet, dass** das besagte Trägerelement (8) auf einer Welle aus magnetischem Material (52) angebracht ist, die dazu geeignet ist, in der besagten Kammer (2) durch die besagte Induktionsantriebsvorrichtung (12) verschoben zu werden.

5. Vorrichtung nach Anspruch 4, **dadurch gekennzeichnet, dass** die besagte Induktionsantriebsvorrichtung (12) eine magnetische Antriebsvorrichtung ist.

6. Vorrichtung nach einem der vorstehenden Ansprüche, **dadurch gekennzeichnet, dass** das Trägerelement (8) die Form einer drehbaren Trommel (40) aufweist, wobei das besagte Rohr (10) auf der Trommel (40) parallel zur Drehachse (Z-Z') der besagten Trommel angebracht ist.

7. Vorrichtung nach Anspruch 6, **dadurch gekennzeichnet, dass** die Trommel (40) eine axiale Hülse (42) und zwei parallele Platten (44, 45), die in der Nähe der Enden der besagten Hülse angeordnet sind, umfasst, und umfassend Mittel zur Montage des besagten Rohrs (10) zwischen den besagten Platten, parallel zur besagten Hülse.

8. Vorrichtung nach den Ansprüchen 4 und 7, **dadurch gekennzeichnet, dass** die besagte Hülse (42) auf der besagten Welle (52) angebracht ist.

9. Vorrichtung nach einem der Ansprüche 1 bis 8, **dadurch gekennzeichnet, dass** sie mehrere Aufnahmekammern umfasst, mindestens eine Zwischenkammer (4), die zwischen einer inneren Kammer (2) und einer äußeren Kammer (6) angeordnet ist, wobei die Induktionsantriebsvorrichtung (12) außerhalb der äußeren Kammer (6) angeordnet ist.

10. Vorrichtung nach Anspruch 9, **dadurch gekennzeichnet, dass** jede der besagten Kammern (2, 4, 6) mindestens ein Zielfenster (32, 34, 36, 38) umfasst, das auf ein Zielfenster von jeder der anderen Kammern ausgerichtet ist.

11. Vorrichtung nach einem der vorstehenden Ansprüche, **dadurch gekennzeichnet, dass** sie Mittel zur Messung des Drucks und/oder der Temperatur in der besagten Kammer (2) umfasst.

## Claims

1. Confinement and analysis device for a plurality of samples (48) arranged in at least one tube (10), comprising:
- at least one vessel having leak-tight closing means (2);
- a support element (8) for said tube (10) adapted to be arranged in said vessel (2); and
- at least one observation window (32, 34, 36, 38) formed through a wall of said vessel (2),
**characterised in that** said device comprises an induction drive device (12) arranged outside said vessel (2) for the displacement of said support element (8) inside said vessel when the vessel is in the closed state, so as to bring any one of the samples of said plurality of samples (48) in front of the observation window (32, 34, 36, 38).

2. Device according to claim 1, **characterised in that** said support element (8) is mounted to be movable in rotation in said vessel in order to bring said tube (10) into a sample analysis position opposite said observation window (32, 34, 36, 38).

3. Device according to either claim 1 or claim 2, **characterised in that** said support element (8) is mounted to be movable in translation in said vessel in order to bring said tube (10) into a sample analysis position opposite said viewing window (32, 34, 36, 38).

4. Device according to either claim 2 or claim 3, **characterised in that** said support element (8) is mounted on a shaft which is made of magnetic material (52) and is adapted to be displaced in said vessel (2) by said induction drive device (12).

5. Device according to claim 4, **characterised in that** said induction drive device (12) is a magnetic drive device.

6. Device according to any one of the preceding claims, **characterised in that** the support element (8) is in the form of a rotating barrel (40), said tube (10) being mounted on the barrel (40) parallel to the axis of rotation (Z-Z') of said barrel.

7. Device according to claim 6, **characterised in that** the barrel (40) has an axial sheath (42) and two parallel plates (44, 45) arranged in the vicinity of the ends of said sheath and having means for mounting said tube (10) between said plates, parallel to said sheath.

8. Device according to claims 4 and 7, **characterised in that** said sheath (42) is mounted on said shaft (52).

9. Device according to any one of claims 1 to 8, **characterised in that** it has a plurality of confinement vessels, at least one intermediate vessel (4) being arranged between an inner vessel (2) and an outer vessel (6), the induction drive device (12) being arranged outside the outer vessel (6).

10. Device according to claim 9, **characterised in that** each of said vessels (2, 4, 6) has at least one observation window (32, 34, 36, 38) aligned with an observation window of each of the other vessels.

11. Device according to any one of the preceding claims, **characterised in that** it has means for measuring the pressure and/or the temperature inside said vessel (2).
